# FASCICULE DE BREVET EUROPEEN

(11) **EP 2 418 070 B1**
(45) Date de publication et mention de la délivrance du brevet: **04.05.2016**
(21) Numéro de dépôt: 10172554.7
(22) Date de dépôt: 11.08.2010
(51) Int. Cl.: B29C 70/34, B32B 7/06, C04B 35/563, E06B 1/60

(54) **Procédé de fabrication d'un produit stratifié à haute résistance thermomécanique**
Herstellungsverfahren eines Schichtprodukts mit hohem thermomechanischen Widerstand
Method for manufacturing a laminated product with high thermomechanical strength

(43) Date de publication de la demande: 15.02.2012
(73) Titulaire: Gastel, Daniel André, 78370 Plaisir les Gatines (FR)
(72) Inventeur: Gastel, Daniel André, 78370 Plaisir les Gatines (FR)
(74) Mandataire: Thinat, Michel

(56) Documents cités:
- EP-A1- 0 667 233
- EP-A1- 0 726 283
- FR-A1- 2 831 095

## Description

L'invention concerne en général les produits stratifiés.

Plus précisément, l'invention concerne, selon un premier aspect, un produit stratifié présentant une épaisseur réglable par délitage, ce produit comprenant un empilement de feuilles présentant chacune une résistance intrinsèque au déchirement, et adhérant l'une à l'autre par une force de liaison plus faible que la résistance des feuilles au déchirement, ce dont il résulte que chaque feuille peut être détachée de l'empilement sans se déchirer.

Des produits de ce type sont enseignés dans le brevet d'invention FR2831095B1, et sont notamment utilisés comme cales de réglage pour des ensembles mécaniques. Ces ensembles mécaniques présentent généralement des jeux importants en certains points, résultant de la combinaison des tolérances de fabrication. Ces jeux sont compensés en insérant des cales.

L'épaisseur de ces cales est ajustée en retirant les feuilles avant ou arrières une à une, jusqu' à ce que l'épaisseur recherchée soit atteinte.

On connaît dans de nombreuses industries mécaniques ou du bâtiment des matériaux stratifiés constitués par une superposition de feuilles métalliques. Par exemple, le document US2980572 enseigne d'empiler des feuilles d'aluminium. On peut avoir tendance à penser que des feuilles métalliques présentent une bonne résistance thermomécanique à des températures élevées. En réalité, les températures sont limitées par la température de fusion du métal, 1538°C pour le fer, voire moins de 661 °C pour l'aluminium qui est un métal plus léger. Or certaines structures mécaniques peuvent être soumises à des températures bien plus élevées, par exemple 725 °C dans un générateur de vapeur de centrale électrique au charbon, 1200 °C lors d'un incendie dans un bâtiment. Le problème des métaux est celui de concilier légèreté et tenue en températures élevées.

De manière plus générale, le problème posé est celui de procurer un matériau approprié pour les secteurs industriels dans lesquels se fait ressentir un besoin pour un matériau léger hautement résistant mécaniquement et thermiquement.

Pour remédier aux problèmes posés par l'état antérieur de la technique, l'invention a pour objet un procédé de fabrication d'un produit stratifié à haute résistance thermomécanique, comprenant des étapes d'assemblage consistant à :
- obtenir une solution organique de monomères et/ou d'oligomères capable d'être, après réticulation, structurellement stable jusqu'à une température de décomposition de résine ;
- obtenir des feuilles de matériau organique structurellement stables jusqu'à une température de décomposition de matériau ;
- enduire au moins une face supérieure de l'une des feuilles avec la solution organique et empiler dessus au moins une autre des feuilles ;
- amener les feuilles empilées à une température de réticulation des monomères et/ou oligomères de la solution organique ;
caractérisé en ce qu'il comprend :
- au moins une étape de mutation consistant au moins à soumettre une feuille à une température de stabilisation supérieure à au moins l'une des températures de décomposition.

Avantageusement, le procédé comprend une étape primaire de mutation consistant à tremper une feuille dans un liquide ou une poudre contenant un composé de bore et à soumettre ladite feuille à une température de stabilisation supérieure à ladite température de décomposition de matériau, avant l'étape consistant à enduire au moins une face supérieure de l'une des feuilles avec la solution organique.

Avantageusement aussi, le procédé comprend une étape secondaire de mutation consistant à soumettre les feuilles empilées à une température de stabilisation supérieure à ladite température de décomposition de résine, après l'étape consistant à empiler une autre feuille sur une feuille enduite.

Particulièrement, l'étape de mutation consiste de plus à tremper les feuilles empilées dans un liquide ou une poudre contenant un composé de bore.

Dans un premier mode de réalisation possible, l'étape consistant à obtenir lesdites feuilles de matériau organique, consiste à obtenir une bande de matériau contenant des fibres organiques d'origine animale ou végétale, tissées ou enchevêtrées pour lesquelles la température de décomposition de matériau est supérieure à 150°C.

Dans un deuxième mode de réalisation possible, indépendamment ou en combinaison avec le premier mode de réalisation possible, l'étape consistant à obtenir lesdites feuilles de matériau organique, consiste à obtenir une bande de matériau contenant des fibres d'aramide, tissées ou enchevêtrées, pour lesquelles ladite température de décomposition est supérieure à 450 °C.

Avantageusement, la solution organique comprend des monomères et/ou des oligomères comportant une fonction cyano ester capable d'être, après polymérisation, structurellement stable jusqu'à une température de décomposition supérieure ou égale à 300°C.

De préférence, la température de stabilisation est supérieure ou égale à 1000°C.

Plus particulièrement, le procédé comprend une étape consistant à exercer une pression prédéterminée sur la pile de feuilles enduites avant de l'amener à ladite température de réticulation.

Optionnellement, le procédé comprend une étape consistant à ajouter du nickel ionique dans la solution organique, ou dans le liquide ou la poudre contenant le composé de bore avant d'exécuter l'étape de stabilisation.

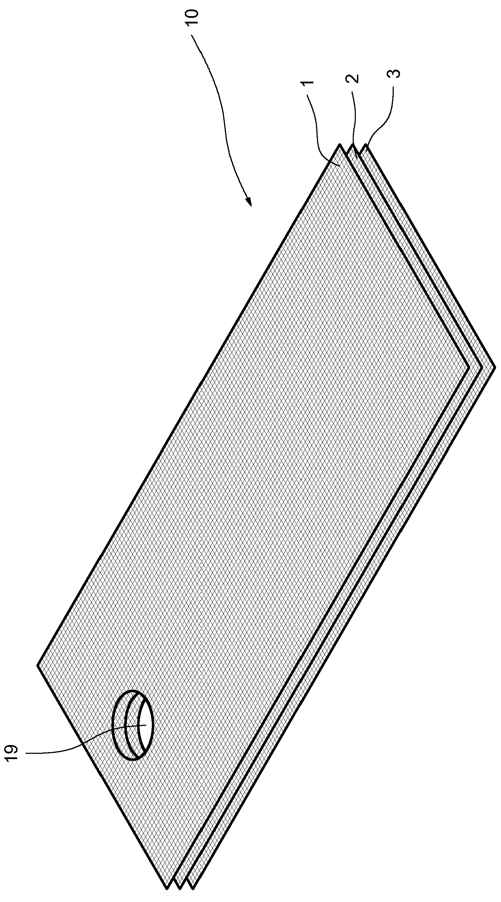

D'autres caractéristiques et avantages de l'invention ressortiront clairement de la description qui en est faite ci-dessous, à titre indicatif et nullement limitatif, en référence à la figure annexée qui est une vue en perspective éclatée d'un produit stratifié obtenu par un procédé conforme à l'invention.

La figure unique montre un produit stratifié 10 constitué par un empilage de feuilles 1, 2, 3. Le procédé que nous allons décrire à présent dans ses différentes variantes, permet d'obtenir un produit stratifié usinable à souhait, par exemple pour le tailler dans les formes qui conviennent à son utilisation, comme illustré par un trou 19 percé avec un degré de finition comparable à celui obtenu dans du métal.

Le procédé de fabrication qui va être décrit permet aussi d'obtenir un produit stratifié à haute résistance thermomécanique, en d'autres termes qui conserve une bonne tenue mécanique lorsqu'il est soumis à des hautes températures, y compris en présence de chocs violents.

Une première étape du procédé consiste à obtenir une solution organique de monomères et/ou d'oligomères capable d'être, après réticulation, structurellement stable jusqu'à une température de décomposition T₁ de la résine polymérisée. Les constituants sont de préférence mais non nécessairement ceux d'une résine thermodurcissable. Une valeur élevée de cette première température T₁ contribue a priori à la tenue en température qui sera obtenue en fin de procédé car les chaînes carbonées obtenues par réticulation ont alors une tendance structurelle à mieux résister aux élévations de température. Nous allons voir dans la suite de la description que d'autres composantes du procédé contribuent à faire résister le produit fini aux hautes températures. Des monomères ou oligomères de résines résistant à des températures moins élevées peuvent alors être sélectionnées, essentiellement en fonction des applications pour lesquelles le produit fini est prévu d'être utilisé.

Une préférence a été portée pour une résine dont la solution organique avant polymérisation, comprend des monomères et/ou des oligomères qui comportent une fonction cyano ester. La structure de ce type de résine a une capacité, après réticulation, de stabilité en température qui monte jusqu'à, voire dépasse 300°C.

Il est intéressant dans certaines circonstance d'ajouter une étape intercalaire au cours de laquelle on additionne du nickel ionique dans la solution organique alors que celle-ci est encore bien en deçà de la température T₁.

Une deuxième étape du procédé consiste à obtenir des feuilles de matériau organique structurellement stable jusqu'à une température de décomposition T₂ du matériau.

Différentes méthodes sont proposées dans le cadre de la présente invention pour obtenir les feuilles de matériau organique.

Selon une première méthode possible, l'étape d'obtention des feuilles de matériau organique, consiste simplement à approvisionner une bande de matériau contenant des fibres organiques d'origine animale ou végétale, tissées ou enchevêtrées. C'est par exemple une bande de tissu de coton, de lin, de chanvre, de viscose, de laine, voire de soie ou d'une matière cellulosique quelconque. Le terme « bande » est à prendre dans son acception la plus large. Il désigne tant une bande de grande longueur livrée sous forme de rouleau qu'un ensemble de feuilles déjà prédécoupées. L'essentiel comme on le verra dans la suite des explications du procédé, est que la matrice soit de nature organique, c'est-à-dire constituée de chaînes hydrocarbonées. A la différence des fibres minérales habituellement utilisées dans les produits stratifiés comme les fibres de verre, les chaînes hydrocarbonées des fibres organiques ont la propriété de se dénaturer sous l'effet d'une élévation de température sans totalement se désagréger si on évite la combustion. Pour éviter la combustion, l'élévation de température est par exemple produite dans un atmosphère de gaz neutre. Parmi de nombreux gaz neutres possibles, on indique notamment l'argon. Par exemple, les fibres de formule chimique globale (C₆H₁₀O₅)ₙ ont une température de décomposition T₂ de l'ordre de 150°C. D'autres fibres organiques que celles d'origine animale ou végétale peuvent être envisagées, notamment les fibres organiques artificielles comme par exemple les fibres d'aramide, tissées ou enchevêtrées, pour lesquelles la deuxième température T₂ est supérieure à 450 °C. La bande est éventuellement coupée à longueur de façon à obtenir des feuilles dont la température de stabilité est simplement celle des fibres qui la constituent.

Une mise en oeuvre du procédé consiste à exécuter une étape primaire de mutation dans laquelle on trempe le matériau dans un liquide contenant un composé de bore, par exemple un sel de bore à base de borax dilué dans de l'eau avec une concentration de 51 g/l ou dans un autre solvant avec une concentration supérieure. Le borax peut aussi être à l'état de poudre en quantité supérieure à celle correspondant à sa solubilité dans le solvant, alors sous forme d'émulsion. Le borax peut enfin être à l'état pur car sa température de fusion relativement basse de 75°C permet d'obtenir un liquide dans une plage de température à laquelle résistent les fibres organiques sans détérioration. On peut aussi utiliser l'acide borique dont la température de fusion est de 171°C. D'autres composés de bore sont à utiliser si l'étape de mutation nécessite d'atteindre des températures supérieures à 320°C sans provoquer d'ébullition. Les fibres organiques sont ainsi imprégnées de bore. On peut arrêter l'étape primaire de mutation à ce stade de façon à produire des feuilles qui ont une température limite de stabilité T₂ qui est la température limite de stabilité des fibres d'origine.

Optionnellement, on peut amener dès l'étape primaire de mutation, le matériau à une température T₄ qui est la température à laquelle des atomes de bore se combinent à des atomes de carbone des fibres organiques. La température T₄ est supérieure à la température T₂. Pour ce faire, on place le matériau dans une étuve, de préférence étanche, en atmosphère neutre pour éviter une combustion franche des fibres organiques lors de l'élévation en température. Par exemple, dans le cas d'une utilisation d'acide borique de formule H₃BO₃, on monte la température au-delà de 171°C qui provoque une liquéfaction de l'acide et une amorce de dénaturation des fibres de cellulose de formule générale (C₆H₁₀O₅)ₙ. Au fur et à mesure de l'élévation en température, des atomes d'oxygène et des atomes d'hydrogène en quantité double ont tendance à se combiner pour quitter progressivement les fibres organiques sous forme de vapeur d'eau. Concomitamment, un atome d'oxygène sur deux se combine à deux atomes d'hydrogène des molécules d'acide borique pour former des molécules d'eau à l'état vapeur. Les autres atomes d'oxygène viennent oxyder les chaînes carbonées des fibres de cellulose, facilitant la combinaison de quatre atomes de bore avec un atome de carbone pour former du carbure de bore. Le processus est contrôlé de façon à maintenir la géométrie macroscopique des fibres en filaments. On obtient ainsi des filaments de céramique de formule CB₄ maintenues dans leur structure tissée ou agglomérée d'origine. On peut noter cependant une réduction de taille explicable par l'évacuation d'atomes de carbones sous forme de monoxyde ou de dioxyde de carbone pendant l'oxydation par le surplus d'oxygène présent dans l'acide borique. Le maintien de la structure tissée lors du passage de la feuille d'une nature organique à une nature céramique, a pour effet corrélé de maintenir une certaine souplesse de la feuille. La température de stabilité des feuilles est alors celle du carbure de bore, équivalente à sa température de fusion qui vaut 2350°C. On notera que cette température est largement supérieure à la température de fusion de nombreux métaux, 1538°C pour le fer, voire moins de 661°C pour l'aluminium. Les feuilles ainsi obtenues sont avantageuses par rapport aux métaux en termes de tenue aux températures élevée, mais pas seulement. Les feuilles sont aussi avantageuses en terme de légèreté. En effet, comparée à la densité du fer qui est égale à 7,32 ou à celle d'alliages d'aluminium qui est égale à 2,74, la densité du carbure de bore est de seulement 2,52. La nature tissée du matériau dans laquelle la céramique de carbure de bore intervient sous forme de filaments espacés par les mailles du tissage, permet d'obtenir une densité inférieure à 2. La réduction de densité qu'il est possible d'obtenir, est essentiellement liée à l'espace entre les fils du tissage.

On peut aussi ajouter du nickel ionique dans le liquide ou la poudre contenant le composé de bore de façon à augmenter la résistance à l'usure du produit stratifié fabriqué.

Dans la deuxième étape, il est possible aussi d'approvisionner directement les feuilles aux caractéristiques souhaitées auprès d'un fournisseur extérieur.

Dans une troisième étape, on enduit au moins deux des feuilles obtenues avec la solution organique et on les empile l'une sur l'autre. A ce stade du procédé, la souplesse des feuilles permet de les empiler dans un moule de forme quelconque pour obtenir une pièce de coque de bateau, de carrosserie de voiture ou toute autre pièce mécanique, notamment destinée à l'industrie spatiale ou aérospatiale.

On fait suivre de préférence la troisième étape par une étape intermédiaire consistant à exercer une pression prédéterminée P sur la pile de feuilles enduites de façon à obtenir une adhérence parfaite entre les feuilles enduite et à évacuer un maximum de résine entre les feuilles pour réduire la couche de résine entre les feuilles à une épaisseur minimale. La pression exercée est aussi utilisée pour obtenir un haut niveau de planéité, d'importance fondamentale, par exemple pour des cales d'épaisseur.

On procède enfin à une quatrième étape après avoir donné au produit stratifié sa forme finale. Dans la quatrième étape, on amène la pile de feuilles enduites à une température T₃ supérieure ou égale à une température qui favorise la réticulation des monomères et des oligomères de la solution organique.

Alternativement, on peut aussi enduire uniquement une face supérieure d'une feuille avec la solution organique puis empiler dessus une autre feuille de façon exécuter une étape secondaire de mutation consistant à soumettre les feuilles empilées à une température de stabilisation T₄ supérieure à la température de décomposition T₁ de résine. La température passe alors par la température de réticulation qui durcit la résine.

Si, dans l'étape de mutation secondaire, on trempe les feuilles empilées dans un liquide ou une poudre contenant un composé de bore, la rupture des chaînes carbonées au-delà de la température de décomposition, provoque des liaisons tétravalentes de carbone avec le bore de sorte qu'on obtient une imbrication de carbure de bore entre les deux feuilles. On répète ensuite les opérations précédentes en enduisant la face supérieure de la feuille précédemment empilée et en empilant dessus une autre feuille et ainsi de suite jusqu'à obtenir un produit stratifié monolithique à haute résistance thermomécanique.

On peut aussi procéder à une réticulation de l'ensemble des feuilles empilées puis monter la température au dessus de la température de décomposition de la résine sans mettre les feuilles en contact de composés de bore, de façon à amorcer une rupture des chaîne de polymère, par exemple au dessus de 350°C pour une résine cyano ester. De la sorte on obtient un produit stratifié pelable utilisable pour des cales d'épaisseur.

Notamment dans une utilisation de réglage d'épaisseur, la réduction dimensionnelle obtenue par rupture des chaînes carbonées et évacuation d'atomes de carbone lors de la montée en température, permet d'augmenter la précision sur l'épaisseur.

En amenant le produit stratifié à une température de stabilisation T₄ supérieure ou égale à 1000°C, on obtient un produit stratifié qui ne se modifie plus tant qu'il est soumis à des températures inférieures 1000°C.

## Revendications

1. Procédé de fabrication d'un produit stratifié à haute résistance thermomécanique, comprenant des étapes d'assemblage consistant à :
- obtenir une solution organique de monomères et/ou d'oligomères capable d'être, après réticulation, structurellement stable jusqu'à une température de décomposition T₁ de résine ;
- obtenir des feuilles de matériau organique structurellement stables jusqu'à une température de décomposition T₂ de matériau ;
- enduire au moins une face supérieure de l'une des feuilles avec la solution organique et empiler dessus au moins une autre des feuilles ;
- amener les feuilles empilées à une température de réticulation T₃ des monomères et/ou oligomères de la solution organique ;
**caractérisé en ce qu'**il comprend :
- au moins une étape de mutation consistant au moins à soumettre une feuille à une température de stabilisation T₄ supérieure à au moins l'une des températures de décomposition T₁, T₂.

2. Procédé selon la revendication 1, **caractérisée en ce qu'**il comprend une étape primaire de mutation consistant à tremper une feuille dans un liquide ou une poudre contenant un composé de bore et à soumettre ladite feuille à une température de stabilisation T₄ supérieure à ladite température de décomposition T₂ de matériau, avant l'étape consistant à enduire au moins une face supérieure de l'une des feuilles avec la solution organique.

3. Procédé selon la revendication 1 ou 2, **caractérisée en ce qu'**il comprend une étape secondaire de mutation consistant à soumettre les feuilles empilées à une température de stabilisation T₄ supérieure à ladite température de décomposition T₁ de résine, après l'étape consistant à empiler une autre feuille sur une feuille enduite.

4. Procédé selon la revendication 3, **caractérisée en ce que** l'étape de mutation consiste de plus à tremper les feuilles empilées dans un liquide ou une poudre contenant un composé de bore.

5. Procédé selon l'une des revendications 1 à 4, **caractérisée en ce que** l'étape consistant à obtenir lesdites feuilles de matériau organique, consiste à obtenir une bande de matériau contenant des fibres organiques d'origine animale ou végétale, tissées ou enchevêtrées pour lesquelles la température de décomposition T₂ de matériau est supérieure à 150°C.

6. Procédé selon l'une des revendications 1 à 5, **caractérisée en ce que** l'étape consistant à obtenir lesdites feuilles de matériau organique, consiste à obtenir une bande de matériau contenant des fibres d'aramide, tissées ou enchevêtrées, pour lesquelles ladite température de décomposition T₂ est supérieure à 450 °C.

7. Procédé selon l'une des revendications précédentes, **caractérisée en ce que** ladite solution organique comprend des monomères et/ou des oligomères comportant une fonction cyano ester capable d'être, après polymérisation, structurellement stable jusqu'à une température de décomposition T₁ supérieure ou égale à 300°C.

8. Procédé selon l'une des revendications précédentes, **caractérisée en ce que** la température de stabilisation T₄ est supérieure ou égale à 1000°C.

9. Procédé selon l'une des revendications précédentes, **caractérisée en ce qu'**il comprend une étape intermédiaire consistant à exercer une pression prédéterminée P sur la pile de feuilles enduites avant de l'amener à ladite température de réticulation T₃.

10. Procédé selon l'une des revendications précédentes, **caractérisée en ce qu'**il comprend une étape consistant à ajouter du nickel ionique dans la solution organique, ou dans le liquide ou la poudre contenant le composé de bore avant d'exécuter l'étape de stabilisation.

## Patentansprüche

1. Herstellungsverfahren eines Schichtprodukts mit hohem thermomechanischen Widerstand, umfassend Montageschritte, die bestehen in:
- Herstellen einer organischen Lösung von Monomeren und/oder Oligomeren, die imstande ist, nach Vernetzung bis zu einer Harz-Zerfallstemperatur T₁ strukturell stabil zu sein;
- Herstellen von Bögen aus organischem Material, die bis zu einer Material-Zerfallstemperatur T₂ strukturell stabil sind,
- Beschichten mindestens einer Oberseite eines der Bögen mit der organischen Lösung und Stapeln auf mindestens einen anderen der Bögen,
- Führen der gestapelten Bögen auf eine Vernetzungstemperatur T₃ der Monomere und/oder Oligomere der organischen Lösung,
**dadurch gekennzeichnet, dass** es umfasst:
- mindestens einen Mutationsschritt, der mindestens darin besteht, einen Bogen einer Stabilisierungstemperatur T₄ auszusetzen, die höher als mindestens eine der Zerfallstemperaturen T₁, T₂ ist.

2. Verfahren nach Anspruch 1, **dadurch gekennzeichnet, dass** es einen primären Mutationsschritt umfasst, der darin besteht, einen Bogen in eine Flüssigkeit oder ein Pulver einzutauchen, enthaltend eine Borverbindung, und den Bogen einer Stabilisierungstemperatur T₄ auszusetzen, die höher als die Material-Zerfallstemperatur T₂ ist, vor dem Schritt, der darin besteht, mindestens eine Oberseite eines der Bögen mit der organischen Lösung zu beschichten.

3. Verfahren nach Anspruch 1 oder 2, **dadurch gekennzeichnet, dass** es einen sekundären Mutationsschritt umfasst, der darin besteht, die gestapelten Bögen einer Stabilisierungstemperatur T₄ auszusetzen, die höher als die Harz-Zerfallstemperatur T₁ ist, nach dem Schritt, der darin besteht, einen anderen Bogen auf einen beschichteten Bogen zu stapeln.

4. Verfahren nach Anspruch 3, **dadurch gekennzeichnet, dass** der Mutationsschritt zusätzlich darin besteht, die gestapelten Bögen in eine Flüssigkeit oder ein Pulver, enthaltend eine Borverbindung, zu tauchen.

5. Verfahren nach einem der Ansprüche 1 bis 4, **dadurch gekennzeichnet, dass** der Schritt, der darin besteht, die Bögen aus organischem Material zu erhalten, darin besteht, einen Materialstreifen zu erhalten, der gewebte oder verschlungene organische Fasern tierischen oder pflanzlichen Ursprungs enthält, für welche die Material-Zerfallstemperatur T₂ über 150 °C beträgt.

6. Verfahren nach einem der Ansprüche 1 bis 5, **dadurch gekennzeichnet, dass** der Schritt, der darin besteht, die Bögen aus organischem Material zu erhalten, darin besteht, einen Materialstreifen zu erhalten, der gewebte oder verschlungene Aramidfasern enthält, für welche die Material-Zerfallstemperatur T₂ über 450 °C beträgt.

7. Verfahren nach einem der vorangehenden Ansprüche, **dadurch gekennzeichnet, dass** die organische Lösung Monomere und/oder Oligomere umfasst, die eine Cyanoesterfunktion aufweisen, die imstande ist, nach Polymerisation bis zu einer Zerfallstemperatur T₁ über oder gleich 300 °C strukturell stabil zu sein.

8. Verfahren nach einem der vorangehenden Ansprüche, **dadurch gekennzeichnet, dass** die Stabilisierungstemperatur T₄ über oder gleich 1000 °C ist.

9. Verfahren nach einem der orangehenden Ansprüche, **dadurch gekennzeichnet, dass** es einen Übergangsschritt umfasst, der darin besteht, einen vorbestimmten Druck P auf den Stapel beschichteter Bögen auszuüben, bevor dieser auf die Vernetzungstemperatur T₃ geführt wird.

10. Verfahren nach einem der vorangehenden Ansprüche, **dadurch gekennzeichnet, dass** es einen Schritt umfasst, der darin besteht, der organischen Lösung oder der Flüssigkeit oder dem Pulver, enthaltend die Borverbindung, vor Durchführung des Stabilisationsschritts organisches Nickel hinzuzufügen.

## Claims

1. A method for manufacturing a laminated product with a high thermomechanical strength, comprising assembly steps consisting of:
- obtaining an organic solution of monomers and/or oligomers capable of being, after cross-linking, structurally stable up to a resin decomposition temperature T₁;
- obtaining sheets of organic material that are structurally stable up to a material decomposition temperature T₂;
- coating at least one upper face of one of the sheets with the organic solution and stacking at least one other sheet on top of it;
- bringing the stacked sheets to a cross-linking temperature T₃ of the monomers and/or oligomers of the organic solution; **characterized in that** it comprises:
- at least one mutation step consisting at least of subjecting a sheet to a stabilization temperature T₄ greater than at least one of the decomposition temperatures T₁, T₂.

2. The method according to claim 1, **characterized in that** it comprises a primary mutation step consisting of dipping a sheet in a liquid or powder containing a boron compound and subjecting said sheet to a stabilization temperature T₄ higher than said decomposition temperature T₂ of the material, before the step consisting of coating at least one upper face of one of the sheets with the organic solution.

3. The method according to claim 1 or 2, **characterized in that** it comprises a secondary mutation step consisting of subjecting the stacked sheets to a stabilization temperature T₄ higher than said resin decomposition temperature T₁, after the step consisting of stacking another sheet on a coated sheet.

4. The method according to claim 3, **characterized in that** the mutation step additionally consists of dipping the stacked sheets in a liquid or powder containing a boron compound.

5. The method according to one of claims 1 to 4, **characterized in that** the step consisting of obtaining such sheets of organic material consists of obtaining a strip of material containing organic fibers of animal or plant origin, woven or entangled, for which the material decomposition temperature T₂ is greater than 150°C.

6. The method according to one of claims 1 to 5, **characterized in that** the step consisting of obtaining such sheets of organic material consists of obtaining a strip of material containing aramid fibers, woven or entangled, for which said decomposition temperature T₂ is about 450°C.

7. The method according to one of the preceding claims, **characterized in that** said organic solution comprises monomers and/or oligomers including a cyano ester function capable of being, after polymerization, structurally stable up to a decomposition temperature T₁ greater than or equal to 300°C.

8. The method according to one of the preceding claims, **characterized in that** the stabilization temperature T₄ is greater than or equal to 1000°C.

9. The method according to one of the preceding claims, **characterized in that** it comprises an intermediate step consisting of exerting a predetermined pressure P on the stack of coated sheets before bringing it to said cross-linking temperature T₃.

10. The method according to one of the preceding claims, **characterized in that** it comprises a step consisting of adding ionic nickel in the organic solution, or in the liquid or powder containing the boron compound before carrying out the stabilization step.
